# EUROPÄISCHE PATENTSCHRIFT

(11) **EP 1 834 927 B1**
(45) Veröffentlichungstag und Bekanntmachung des Hinweises auf die Patenterteilung: **15.05.2019**
(21) Anmeldenummer: 07005352.5
(22) Anmeldetag: 15.03.2007
(51) Int. Cl.: C02F 1/00

(54) **VORRICHTUNG ZUR WASSERAUFBEREITUNG MIT VERSCHNITTVORRICHTUNG**
APPARATUS FOR WATER TREATMENT COMPRISING A BLENDING DEVICE
APPAREIL DE TRAITEMENT DE L'EAU COMPRENANT UN DISPOSITIF MÉLANGEUR

(30) Priorität: 17.03.2006 DE 102006012697
(43) Veröffentlichungstag der Anmeldung: 19.09.2007
(73) Patentinhaber: Aquis Wasser-Luft-Systeme GmbH, Lindau, 9445 Rebstein (CH)
(72) Erfinder: Scholz, Roland, 42781 Haan (DE); Wawrla, Andreas, 9943 Widnau (CH)
(74) Vertreter: Otten, Roth, Dobler & Partner mbB Patentanwälte

(56) Entgegenhaltungen:
- EP-A1- 0 947 231
- EP-A2- 0 668 243
- EP-A2- 0 992 459
- WO-A-03/076342
- WO-A1-94/22551
- WO-A1-03/037479
- DE-A1- 2 024 981
- DE-A1- 2 843 294
- JP-A- 2003 019 480
- US-A- 2 447 920
- US-A- 4 943 371

## Beschreibung

Die Erfindung betrifft eine Vorrichtung zur Wasseraufbereitung nach dem Oberbegriff des Anspruchs 1.

### Stand der Technik

Wasseraufbereitungsvorrichtungen, insbesondere zur Enthärtung, Entkarbonisierung oder Entmineralisierung von Wasser in unterschiedlichen Bauformen sind bereits handelsüblich. Hierbei gibt es Vorrichtungen, die mit automatischen Regeneriereinrichtungen versehen sind oder Austauscheinheiten, wie Filterkerzen beinhalten. Zur Einstellung einer für die jeweilige Anwendung vorbestimmten Wasserqualität sind auch Verschnitteinrichtungen in Gebrauch, um eine Mischung eines über eine Filterstrecke aufbereiteten Wassers mit nicht über die Filterstrecke geleitetem Wasser zu erzeugen.

Derartige Systeme finden Anwendung bei der Trinkwasseraufbereitung in privaten Haushalten als zentrale oder dezentrale Installation, für die Speisung von Entnahmestellen, speziell für die Speisung von modernen Küchengeräten (Wasser-Zapfstellen und Eisbereiter in modernen Kühlschränken oder Kaffeemaschinen) und darüber hinaus in kommerziellen Bereich zur Speisung von Getränkeautomaten zur Bereitung von Kaffee, Dampf, Heiß- oder Kaltwasser zum Zwecke der Geschmacksoptimierung der damit aufbereiteten oder hergestellten Getränke und Speisen und zum Schutz der Maschinen vor wasserbedingten technischen Problemen.

Die bisher im beschriebenen Einsatzbereich üblichen Verschnitteinrichtungen werden zu Beginn der Inbetriebnahme auf ein vorgegebenes Mischungsverhältnis eingestellt, welches aus dem bekannten oder durch einen Schnelltest ermittelten Mineralgehalt bzw. Härtegehalt des Eingangswassers und der für die Anwendung geforderten Filtratwasser-Qualität ermittelt wird.

Die Leistungsfähigkeit, der verschiedenen Aufbereitungsstufen erschöpft sich jedoch fortlaufend in Abhängigkeit von der bereits über die Aufbereitungsstrecke geführten Wassermenge und der Rohwasserqualität, so dass sich bei einem fest eingestellten Verschnittverhältnis die produzierte Wasserqualität in Abhängigkeit vom Erschöpfungsverlauf der Aufbereitungsstrecke fortlaufend verändert.

Damit jedoch eine für die Anwendung geforderte Mindest-Wasserqualität über die gesamte Einsatzzeit der Aufbereitung bis zum Austausch bzw. zur nächste Regeneration der Aufbereitungseinheit gewährleistet wird, ist es erforderlich, das Verschnittverhältnis zu Beginn der Inbetriebnahme so zu wählen, dass die produzierte Wasserqualität bis zum Ende der Einsatzzeit die Minimalanforderung des Verbrauchers nicht unterschreitet.

Diese Minimaleinstellung führt jedoch dazu, dass sich die Wasserqualität fortlaufend verändert und damit dem jeweiligen Verbraucher über einen weiten Einsatzbereich des Filters kein optimales Speisewasser zugeführt wird. Außerdem kann die Entmineralisierungsleistung der Aufbereitungsstrecke aus Sicht ernährungsphysiologischer und medizinischer Aspekte in der ersten Betriebsphase nach Inbetriebnahme der Aufbereitungsstrecke zu hoch sein. Darüber hinaus wird die Aufbereitungsstrecke stärker als notwendig belastet, wodurch sie entsprechend schneller erschöpft und höhere Verbrauchkosten generiert werden.

Aus der US 4,943,371 ist eine Vorrichtung zur Reduzierung von Leitungsfraß in Kupferleitungen umfassenden Wasserleitungssystemen bekannt, die ein im Betrieb fest in ein Gebäude-Wasserleitungssystem integriertes, wasserdichtes Filtergehäuse umfasst. Um einen ordnungsgemäßen Betrieb zu ermöglichen, wird in dieser Druckschrift vorgeschlagen, nach Erschöpfung des Filtrates dieses wieder zu regenerieren. Aus der DE 28 43 294 ist ein Verfahren und eine Vorrichtung zum Einstellen einer wählbaren Erniedrigung der Karbonhärte für Getränkeaufbereitungswasser, insbesondere Brauwasser bekannt. Zur Wasseraufbereitung wird auch in dieser Schrift vorgeschlagen, den Kalziumkarbonat-Filter von Zeit zu Zeit durch kurzes Rückspülen zu reinigen und den Filterstoff zur Aufbereitung des Rohwassers entsprechend seines Verbrauchs zu ergänzen. Auch die EP 0 992 459 A2 beschreibt eine Wasserbehandlungsvorrichtung, bei der eine Regeneration des darin enthaltenen Behandlungsmediums vorgesehen ist.

Die WO 03/076342 A1 beschreibt demgegenüber eine Wasserfiltervorrichtung, die als Endgerät an eine Wasserleitung angeschlossen werden kann und einen Wasserauslauf zur direkten Wasserabgabe von zu 100 % durch ein Filtermedium ohne jegliche Verschnitteinrichtung gefilterten Wasser aufweist.

Die JP 2003-19480 beschreibt eine Filtervorrichtung, bei der in einer Filterstrecke Wechselaustauschfilter parallel geschaltet sind, wobei nach Erschöpfung eines ersten Filters mittels Umschaltventilen die Filterstrecke über einen weiteren Filter geführt wird. Die DE 20 24 981 beschreibt eine Vorrichtung zum Verschneiden von enthärtetem Wasser mit hartem Rohwasser, bei der mittels eines Membranventils in einem Bypasspfad Änderungen des Härtegrades des Verschnittwassers verhindert werden sollen, die von Schwankungen des Wasserdruck und/oder Schwankungen der Wasserentnahmemenge herrühren. Die EP 0 668 243 beschreibt eine Wasserfiltervorrichtung mit einem Wasservorratsbehälter, beispielsweise einer Wasserfilterkanne, auch Auftischgerät genannt, bei der mittels einer Kreislaufführung des Wassers auch mit relativ kleinen Mengen an Filtermaterialien eine kurzfristige Bereitstellung von relativ großen Wassermengen mit gleichbleibender Wasserqualität ermöglicht werden soll.

### Aufgabe und Lösung

Aufgabe der Erfindung ist es daher, eine Vorrichtung zur Wasseraufbereitung vorzuschlagen, bei der diese Nachteile wenigstens teilweise vermieden werden.

Diese Aufgabe wird durch eine Vorrichtung nach Anspruch 1 gelöst.

Durch die in den Unteransprüchen genannten Maßnahmen sind vorteilhafte Ausführungen und Weiterbildungen der Erfindung möglich.

Erfindungsgemäß zeichnet sich daher eine Vorrichtung nach Anspruch 1 dadurch aus, dass das Stellelement zur Verstellung des Verschnittverhältnisses, dass heißt des Verhältnisses der Menge aufbereiteten Wassers zur Menge nicht oder auf andere Weise aufbereiteten Wassers oder umgekehrt, abhängig von wenigstens einem Betriebsparameter der Vorrichtung während des Betriebs durch die Vorrichtung selbsttätig betätigbar ist.

Hierdurch ist die Vorrichtung zur Wasseraufbereitung in der Lage, eine Verschnittkorrektur im Sinne einer Nachjustierung oder Nacheinstellung vorzunehmen, wodurch dem Verbraucher innerhalb einer gewissen Bandbreite eine im Wesentlichen konstante Wasserqualität zugeführt werden kann. Das Aufbereitungsmedium wird dadurch optimal belastet, so dass es länger eingesetzt und die Verbrauchskosten reduziert werden können. Die selbsttätige Verschnittkorrektur kann dabei kontinuierlich oder in Stufen geschaltet sein.

Die selbsttätige Einstellung des Verschnittverhältnisses wird hierbei vorzugsweise an den Wasserzustand, dass heißt an den Rohwasserzustand und/oder den Zustand des aufbereiteten Wassers und/oder an den Zustand des Aufbereitungsmediums mittels des erfindungsgemäßen Stellelementes vorgenommen.

Die erfindungsgemäße Wasseraufbereitungsvorrichtung kann mit einer Regeneriereinheit zur Regeneration des Aufbereitungsmediums versehen werden. Für den eingangs erwähnten erfindungsgemäßen Einsatzweck empfiehlt sich jedoch die Verwendung eines austauschbaren Wechselelementes, so dass bei vergleichsweise geringem Aufwand mit einer nur sehr kurzen Stillstandszeit ein im Wesentlichen dauerhafter Betrieb mit erfindungsgemäß aufbereitetem Wasser möglich ist.

Um den Austausch des Filtermediums mittels eines Wechselelementes möglichst schnell und mit geringen Aufwand zu bewerkstelligen, wird neben dem austauschbaren Wechselelement ein in der jeweiligen Wasserleitung verbleibendes Anschlusselement vorgesehen. Somit ist für den Austausch des Wechselelementes kein Montageaufwand im Bereich der Wasserleitung erforderlich.

Der Wasserzustand ist dabei nicht unabhängig vom Zustand des Aufbereitungsmediums zu betrachten. So kann beispielsweise über den Wasserzustand in Verbindung mit der aufbereiteten Wassermenge sowie dem Verschnittverhältnis eine Aussage über die Erschöpfung des Aufbereitungsmediums getroffen werden. Umgekehrt kann auch bei bekanntem Erschöpfungszustand des Aufbereitungsmediums in Verbindung mit der aufbereiteten Wassermenge sowie dem Verschnittverhältnis eine Aussage bezüglich des Wasserzustand getroffen werden.

Zur Anpassung des Verschnittverhältnisses an den Wasserzustand und/oder den Zustand des Aufbereitungsmediums wird vorzugsweise wenigstens ein Sensorelement zur Erfassung des Wasserzustandes und/oder des Zustandes wenigstens eines Teils des Aufbereitungsmediums vorgesehen. Auf diese Weise ist während des Betriebs eine automatisch erfassbare Messgröße vorhanden, die zur Bestimmung eines Soll-Verschnittverhältnisses und damit auch zur Einstellung des tatsächlichen Verschnittverhältnisses herangezogen werden kann.

In einer vorteilhaften Ausführung der Erfindung wird weiterhin ein Kontrolleinheit zur Steuerung des Verschnittverhältnisses vorgesehen. Diese Kontrolleinheit wird im Falle der Verwendung eines Sensors wie vorbeschrieben mit einem Eingang für die Sensordaten versehen, so dass die Kontrolleinheit in der Lage ist, abhängig von derartigen Vorgaben des Verschnittverhältnis zu steuern.

In einer einfachen Variante der Erfindung kann die Kontrolleinheit jedoch auch über andere Vorgaben, beispielsweise nur über bestimmte Betriebszeiten der Wasseraufbereitungsvorrichtung die Einstellung des Verschnittverhältnisses vornehmen. Auch die Erfassung der aufbereiteten Wassermenge kann zur Steuerung des Verschnittverhältnisses herangezogen werden, wobei vorzugsweise zur Erfassung dieser Wassermenge ein Mengenmessgerät, beispielsweise ein Flowmeter vorgesehen wird.

Die Wasseraufbereitung kann dabei eine Wasserenthärtung, Entkarbonisierung und/oder eine Entmineralisierung beinhalten. Auch eine Geschmacksverbesserung mit Hilfe eines Filterstoffes, wie Aktivkohle oder dergleichen kann bei einer erfindungsgemäßen Wasseraufbereitungsvorrichtung vorgesehen werden. Zu diesem Zwecke werden ein oder mehrere Aufbereitungsbereiche der Wasseraufbereitungsvorrichtung bevorzugt mit einem Filtermaterial und/oder einem Ionentauschermaterial versehen, bei dessen Durchlaufen das Rohwasser gefiltert und enthärtet, bzw. entmineralisiert oder entkarbonisiert wird.

In einer bestimmten Ausführungsform der Erfindung werden zwei oder mehrere Aufbereitungsbereiche mit unterschiedlichen Aufbereitungsmedien versehen. So kann beispielsweise ein Aufbereitungsbereich mit Aktivkohle und ein anderer Aufbereitungsbereich mit Ionentauschermaterial versehen werden. Unter einer erfindungsgemäße Verschnittvorrichtung ist in diesem Zusammenhang ausdrücklich auch ein Vorrichtung zu verstehen, die aus verschiedenen Aufbereitungsbereichen stammendes und somit unterschiedlich aufbereitetes Wasser miteinander verschneidet. Es ist somit nicht zwingend notwendig, dass nur nicht aufbereitetes mit aufbereitetem Wasser verschnitten wird, es kann vielmehr auch beispielsweise ein mit Aktivkohle aufbereitetes Wasser mit einem mittels Ionentauschermaterial enthärtetem Wasser gemischt werden.

Für die selbsttätige Betätigung des Stellelementes wird vorzugsweise ein Antrieb mit einem Energiespeicher vorgesehen. Je nach Ausgestaltung des Stellelementes kann hierzu ein elektrischer und/oder mechanischer Antrieb und ein elektrischer und/oder mechanischer Energiespeicher vorgesehen werden. Als elektrischer Energiespeicher kommen die bekannten Möglichkeiten, beispielsweise eine- Batterie oder ein Akkumulator, in besonderen Anwendüngsfällen auch der Einsatz eines geladenen Kondensators in Betracht. Als mechanischer Energiespeicher wäre bei entsprechend mechanischer Ausgestaltung des Antriebs des Stellelementes beispielsweise der Einsatz einer Spannfeder von Vorteil. Als mechanischer

Energiespeicher könnte beispielsweise auch ein Druckspeicher zur Betätigung eines Zylinders oder dergleichen vorgesehen werden. Auch die Kombination eines elektrischen und eines mechanischen Antriebs ist denkbar. So könnte beispielsweise ein über eine gespannte Feder antreibbarer Rastkamm mittels eines Dorns in einer bestimmten Position fixiert werden, wobei der Dorn über ein elektrisches Stellglied, beispielsweise eine Spule taktweise aus der Rasterung des Rastkamms gezogen wird, so dass die Feder den Rastkamm über eine Rasterung verschieben kann, bevor der Dorn wieder in den Rastkamm eingreift. Auch andere Kombinationen zwischen elektrischem und mechanischem Antrieb wären denkbar.

Um den Antrieb des Stellelementes von einer separaten externen Energieversorgung unabhängig auszugestalten, könnte auch ein durch Wasserdruck aufladbarer Energiespeicher vorgesehen werden. Der Wasserdruck des Leitungsnetzes könnte hierbei unmittelbar oder mittelbar zur Betätigung des Stellelementes verwendet werden. Vorstellbar wären hier beispielsweise Druckbehälter mit einer durch den Wasserdruck aufschlagbaren Membran oder aber auch ein Stromerzeuger, der durch Wasserdruck betrieben wird, zum Beispiel eine Turbine.

Darüber hinaus kann in einer besonderen Ausführungsform das Stellelement auch unmittelbar wenigstens teilweise hydraulisch betätigbar sein, so dass ein unmittelbares Ausnutzen des Wasserdrucks möglich ist. So könnte beispielsweise ein Hydraulikmotor oder Hydraulikzylinder unmittelbar mit dem Leitungswasser beaufschlagt werden. Die Ansteuerung könnte hierbei ähnlich wie bei einem Servoventil vorgenommen werden.

Als Antrieb für das Stellelement kommt grundsätzlich jede Art von Motor infrage, beispielsweise auch eine Elektromotor, oder sonstige Antriebsmittel, wie ein Pneumatikzylinder, ein Hydraulikzylinder oder dergleichen.

Neben der oben beschriebenen Ausführungsform, die die Energie zur Betätigung des Stellelementes aus dem Wasserdruck bzw. der Wasserströmung der Wasserleitung bezieht, wäre in einer anderen Ausführungsform der Aufladung des Energiespeichers im Zuge des Austausches eines Wechselelemente vorteilhafterweise möglich. Denkbar wäre beispielsweise das Spannen einer Feder beim Einsetzen eines frischen Wechselelementes, etwa über entsprechende Mitnehmer oder dergleichen. Auch die Ausstattung des Wechselelementes mit einem Energiespeicher, z.B. einer Batterie, einer gespannten Feder oder dergleichen, könnte erfindungsgemäß vorgesehen werden, so dass der Energiespeicher nicht aufgeladen, sondern zusammen mit dem Wechselelement ersetzt wird.

Die erfindungsgemäße Wasseraufbereitungsvorrichtung umfasst ein Drosselventil.

Mit Hilfe eines oder mehrerer Drosselventile ist es möglich, das Verschnittverhältnis in kontinuierlichen Betrieb einzustellen. Der kontinuierliche Betrieb ist insbesondere dann vorzuziehen, wenn die aufbereitete, verschnittene Wassermenge in vergleichsweise kleinen Mengeneinheiten bezogen wird, so dass eine kontinuierliche Durchmischung von aufbereitetem und nicht oder auf andere Weise aufbereitetem Wasser notwendig ist, um eine weitgehend gleichbleibende Wasserqualität sicher zu stellen.

Ein Verschnittventil wie oben erwähnt kann zugleich dazu verwendet werden, um die Wasserleitung beim Austausch eines Wechselelementes zu verschließen, so dass keine zusätzlichen Maßnahmen am Wasserleitungsnetz, insbesondere keine Betätigung eines zusätzlichen Absperrventils erforderlich ist. Für diese Anwendung kann jedoch bei Bedarf auch ein separates Schaltventil vorgesehen werden.

Für das kontinuierliche Verschneiden von aufbereitetem Wasser mit Rohwasser wird vorzugsweise ein erster Strömungspfad mit einer Aufbereitungsstrecke und ein zweiter Strömungspfad ohne bzw. mit anderer Aufbereitungsstrecke vorgesehen, wobei beide Strömungspfade gleichzeitig durchströmbar sind. Beide Strömungspfade werden hinter der Aufbereitungsstrecke des ersten Strömungspfades miteinander verbunden, so dass sich dort eine Durchmischungszone bildet und kontinuierlich Wasser mit im wesentlichen gleichbleibendem Verschnittverhältnis bezogen werden kann.

Zur Einstellung des Verschnittverhältnisses wird dabei eine Drosseleinheit zur Veränderung des Volumenstroms durch wenigstens einen Strömungspfad des Wassers in der Vorrichtung vorgesehen. Eine solche Veränderung des Volumenstroms wird durch eine Querschnittsveränderung eingestellt.

Vorzugsweise wird dabei ein Drosselelement zur gemeinsamen Veränderung des Volumenstroms durch beide Strömungspfade vorgesehen. Im zuletzt genannten Fall ist zum einen eine Einstellung des Verschnittverhältnisses in einem größerem Bereich möglich, zum Anderen kann damit auch der Gesamtdurchfluss über ein derartiges Drosselelement stärker beeinflusst werden.

Eine erfindungsgemäße Einstellung des Verschnittverhältnisses wird über ein bewegliches Drosselelement mit Durchlässen für zwei oder mehrere Strömungspfade eingestellt, mittels dem positionsabhängig der Querschnitt der Strömungspfade veränderbar ist. Bei einem derartigen Drosselelement ist dann das Verschnittverhältnis unmittelbar abhängig von der Position des Drosselelementes, das über das Stellelement positionierbar ist.

Das Drosselelement ist eine Drehscheibe, die in axialer Richtung Durchlässe für die beiden Strömungspfade aufweist. Durch Drehung einer solchen Drehscheibe um ihre Achse können damit Strömungspfade geöffnet oder geschlossen werden.

Eine erfindungsgemäße Verstellung des Verschnittverhältnisses kann auch dadurch bewirkt werden, dass für den gleichen Strömungspfad zwei oder mehrere Leitungsführungen vorgesehen sind, die parallel verlaufen und einzeln zu einer Gesamtleitung zu- bzw. abschaltbar sind. Somit lassen sich die Einzelquerschnitte derartiger Leitungen zu einem Gesamtquerschnitt aufaddieren. Eine derartige Ausgestaltung könnte beispielsweise mit einer Drehscheibe im obigen Sinne realisiert werden, die mehrere Durchlässe für den gleichen Strömungspfad aufweist und die je nach gewünschtem Verschnittverhältnis im gleichen Strömungspfad zu- bzw. abgeschaltet werden.

Wie bereits oben erwähnt werden zur Erfassung des Wasserzustandes und/oder des Zustandes des Aufbereitungsmediums wenigstens ein oder mehrere Sensorelemente vorgesehen. In Frage kommen hier zum Beispiel Leitwertsensoren, kapazitive Sensoren, ein Flowmeter oder dergleichen, um den Wasserzustand oder den Zustand des Aufbereitungsmediums zu messen bzw. zu bestimmen. Das Sensorelement zur Messung des Wasserzustandes kann dabei im Bereich des Rohwassers und/oder im Bereich des aufbereiteten Wassers angeordnet werden. Um mit Hilfe der Wasserzustandsmessung einen unmittelbaren Rückschluss auf den Erschöpfungszustand des Aufbereitungsmediums zu erhalten, empfiehlt es sich, sowohl im Bereich des Rohwassers als auch im Bereich des aufbereitetem Wassers den Wasserzustand, beispielsweise die Wasserhärte oder dergleichen, zu messen. Aus dem Vergleich beider Messung sind sodann Rückschlüsse über die Kapazität des Aufbereitungsmediums möglich.

Darüber hinaus können mit Hilfe einer derartigen Messung durch Vergleich zweier Wasserzustände Fehlerquellen eliminiert oder reduziert werden. Bei einer Auswertung der Differenz zweier Messwerte kann beispielsweise ein für beide Messungen konstanter Fehler vollständig eliminiert werden.

In einer weiteren vorteilhaften Ausführungsform der Erfindung wird zudem ein Kommunikationselement im Anschlusselement und/oder im Wechselelement und/oder der Kontrolleinheit vorgesehen. Die Kommunikation zwischen wenigstens zwei solchen Komponenten ermöglicht zum einen die Übertragung erforderlicher Betriebsparameter an die Kontrolleinheit. Darüber hinaus kann beispielsweise über ein Kommunikationselement im Wechselelement eine Authentifiezierung des Wechselelementes vorgenommen werden. Neben einer Typenerkennung für das Wechselelement ist darüber hinaus die Übertragung von Zustandsdaten, und so weiter möglich.

Ein derartiges Kommunikationselement kann beispielsweise mit einem drahtlosen Datenkanal versehen sein. Dies ist insbesondere für die Kommunikation zwischen Wechselelement und Anschlusselement bzw. Kontrolleinheit von Vorteil, da beim Austausch des Wechselelementes keine Leitungsverbindung für die Informationsübertrag geschlossen werden muss. Denkbar wären jedoch auch drahtgebundene Kommunikationskanäle, die beim Einsetzen des Wechselelementes beispielsweise über Schleif- oder Federkontakte geschlossen werden.

Im Falle einer drahtlosen Kommunikation empfiehlt es sich dabei, auch die für die Kommunikation erforderliche Energie drahtlos zu übertragen.

Unter einem Kommunikationselement ist hierbei.jedes Element zu verstehen, mittels dem eine Information beispielsweise von dem Wechselelement an die Kontrolleinheit übertragbar ist.

Auf diese Weise ist eine Kontrolle möglich, inwieweit das Wechselelement zur gewünschten Verwendung in der Lage oder geeignet ist.

In einer vorteilhaften Ausführungsform der Erfindung wird hierbei ein berührungslos lesbares Kommunikationselement vorgesehen. Eine solche Ausgestaltung hat den Vorteil, dass beim Einsetzen des Wechselelementes in das Anschlusselement kein Anschluss für das Kommunikationselement vorgesehen werden muss.

Das Kommunikationselement kann auf unterschiedlichen technischen Übermittlungsprinzipien beruhen. So kann ein magnetisches, ein elektromagnetisches, ein optisches und/oder auch ein auf Schall bzw. Ultraschall beruhendes Kommunikationselement vorgesehen werden. Alle diese Funktionsprinzipien bieten die Möglichkeit, eine Information zu übertragen, beispielsweise von dem Wechselelement zur Kontrolleinheit.

In einer Weiterbildung der Erfindung wird das Kommunikationselement mit einem Sender für die Informationsübertragung zu einem Empfänger, zum Beispiel der Kontrolleinheit versehen. Auf diese Weise kann ein Datenübertragungskanal realisiert werden, über den eine große Menge an Informationen übertragbar ist.

In einer Weiterbildung dieser Ausführungsform wird ein Datenaustausch zwischen der Kontrolleinheit und dem Wechselelement vorgesehen. Dies ermöglicht eine größere Flexibilität hinsichtlich des Umfangs und der Art der auszutauschenden Informationen.

Durch einen Datenaustausch zwischen dem Kommunikationselement des Wechselelementes und der zugehörigen Kontrolleinheit ist eine weitgehend fälschungssichere Authentifizierung des Wechselelementes möglich. Auf diese Weise kann sichergestellt werden, das nur zugelassene und geeignete Wechselelemente bei der entsprechenden Aufbereitungsvorrichtung zum Einsatz kommen.

Die Sicherheit der Authentifizierung kann beispielsweise dadurch gewährleistet werden, das wenigstens zwei Informationen im Informationsspeicher des Wechselelementes hinterlegt werden, die miteinander mit einem Authentifizierungsalgorithmus verknüpft sind. Eine Kontrolleinheit, die mit dem passendem Algorithmus programmiert ist, kann somit feststellen, ob die beiden ausgelesenen Informationen in der vorgesehenen Weise miteinander verknüpft sind. Die Informationen selbst können dabei für jedes Wechselelement verschieden sein, da die Kontrolleinheit stets nur die Verknüpfung über den Algorithmus überprüft. So könnte eine der Informationen beispielsweise die Seriennummer und die zugehörige zweite Information eine entsprechend verschlüsselte Prüfziffer sein.

Ein Datenaustausch zwischen dem Kommunikationselement des Wechselelementes und der Kontrolleinheit ermöglicht z.B. auch den Einsatz von Wechselelementen, die spezifisch, z.B. nach Übermittlung der Information, um welche Aufbereitungsvorrichtung es sich handelt, die erforderlichen Daten übermitteln. Eine Datenbank auf Seiten der Kontrolleinheit, die mögliche Typen beinhaltet, braucht dabei nicht mehr vorgesehen zu werden oder zumindest nicht regelmäßig aktualisiert werden, da diese Informationen bei einem Datenaustausch beispielsweise durch das Wechselelement vorgenommen werden können.

Weiterhin ist es möglich, in einem solchen Fall Funktionselemente an dem Wechselelement anzubringen, z.B. Sensoren, die den Beladungs- oder Erschöpfungsgrad des Wechselelementes messen, um diese Daten der Kontrolleinheit zu übermitteln.

Vorteilhafterweise wird das Kommunikationselement mit einem Informationsspeicher versehen. In einem solchen Informationsspeicher können alle relevanten Daten des Wechselelementes abgelegt und der Kontrolleinheit somit zur Verfügung gestellt werden. Hierbei kommen bevorzugt bauteilspezifische Daten, wie beispielsweise eine Seriennummer, die Größe, Aufbereitungskapazität oder die Art der Aufbereitung in Frage.

Ein solches Kommunikationselement wird vorzugsweise mit einem mikroelektronischen Chip versehen. Auf diese Weise ist ein "intelligenter" Datenaustausch möglich. Neben ausschließlich dem Wechselelement zuzuordnenden, spezifischen Daten wie Seriennummern oder dergleichen wie oben angeführt, können beispielsweise mittels eines solchen "intelligenten" Kommunikationselementes auch Steuersignale für die Kontrolleinheit abhängig vom Zustand des Aufbereitungsmechanismus an die Kontrolleinheit übermittelt werden.

Insbesondere ist ein solches Kommunikationselement auch wiederbeschreibbar oder programmierbar gestaltbar, sodass beispielsweise im Falle einer Aufarbeitung eines solchen Wechselelementes durch Austausch der Füllung oder dergleichen das Kommunikationselement wieder mit der entsprechenden aktuellen Information versehen werden kann. Die Flexibilität hinsichtlich der Beschreibbarkeit bzw. Programmierbarkeit macht darüber hinaus eine Anpassung von derart ausgebildeten Wechselelementen für den Einsatz in modifizierten oder neuen Gerätetypen sehr einfach möglich.

Im Falle der Verwendung eines Kommunikationselementes mit einem Sender, der Signale mittels Schwingungen überträgt, beispielsweise eines elektromagnetischen Senders, wird vorzugsweise die Frequenz des Senders abgestimmt auf die Transmission durch das Wasser, das ein solches Wechselelement umgeben, bzw. beinhalten kann. Durch eine entsprechende Frequenzauswahl können Störeffekte des Wassers in der Übertragungsstrecke reduziert oder ganz vermindert werden.

Im Falle eines elektromagnetischen Senders wird die Sendefrequenz beispielsweise in einem Intervall zwischen 110 Kilohertz und 140 Kilohertz gewählt. Bevorzugt wird die Sendefrequenz dabei auf ca. 125 Kilohertz eingestellt, da sich diese Frequenz als besonders störungsfrei für einen Übertragungskanal durch Wasser herausgestellt hat. Auch ein Frequenzbereich zwischen 11 MHz und 15 MHz, vorzugsweise von 13 MHz ist für diese Anwendung geeignet. Bei der Transmission durch Wasser kann eine Frequenzverschiebung eintreten. Vorzugsweise wird in diesem Fall bei der Fertigung bzw. der Einstellung der Sende- und/oder Empfangsfrequenzen eine gezielte Verstimmung zwischen den Kommunikationselement des Wechselelementes und dem Kommunikationselement der Kontrolleinheit vorgesehen, um eine solche Frequenzverschiebung zu kompensieren.

Vorzugsweise findet, wie oben angegeben, eine drahtlose Energieversorgung für das Sendeelement des Wechselelementes statt. Eine solche Energieübertragung kann beispielsweise durch Induktion über eine Magnetspule erfolgen, sodass kein Energiespeicher oder allenfalls ein Kondensator im Kommunikationselement selbst erforderlich ist.

Vorteilhafterweise wird das Kommunikationselement wasserdicht in dem Wechselelement angebracht. So kann das Kommunikationselement z.B. in einer wasserdichten Hülle verbaut sein, die ihrerseits an oder in dem Wechselelement befestigt ist. Eine solche Ausführung ermöglicht beispielsweise auch ein austauschbares Kommunikationselement, das lösbar von dem Wechselelement ausgebildet wird.

In einer anderen Ausführungsform der Erfindung wird das Kommunikationselement wasserdicht in die Wandung des Wechselelementes eingeformt. Zum einen ist bei dieser Ausführungsform die Fertigung und Abdichtung besonders einfach, zum anderen ist bei einer solchen Bauweise gewährleistet, dass die spezifischen Informationen des Wechselelementes stets auf das mit dem Kommunikationselement verbundene Wechselelement auch zutreffen.

Ein anderer sensorisch zu erfassende Betriebsparameter wären beispielsweise der Beladungsgrad bzw. der Erschöpfungsgrad des Wechselelementes. Ein derartiger Sensor könnte beispielsweise als Leitwertsensor ausgebildet sein. Eine andere Variante wäre durch einen Ortsensor möglich, der mit dem Filtermaterial beweglich angebracht wird und damit Bewegungen des Filtermaterials nachvollzieht. Das Volumen von Ionentauscherharzen ist je nach Beladungszustand verschieden, so dass über einen solchen Sensor letztendes der Beladungszustand erfassbar ist.

Ein derartiger Sensor kann beispielsweise auch als Füllstandsensor oder als Durchflusssensor für das Wechselelementes eingesetzt werden.

Vorzugsweise wird ein solcher Sensor als passives Sensorelement ohne Energiespeicher ausgebildet, wobei auf Seiten der Kontrolleinheit ein aktives Sensorelement mit Sender und Empfänger vorgesehen wird. Durch die drahtlose Energieübertragung auf das passive Sensorelement erübrigen sich in diesem Fall ebenso wie bei der entsprechenden Ausführung des Kommunikationselementes Energiespeicher oder elektrische Leitungen zum Wechselelement.

In einer Weiterbildung dieser Ausführungsform wird wenigstens ein elektrischer Schwingkreis für die Datenübertragung bzw. die Energieübertragung vorgesehen. Ein solcher Schwingkreis kann durch elektromagnetische Strahlung angeregt werden und die für den Betrieb eines Sensorelementes und/oder eines Kommunikationselementes notwendige Energie aufnehmen. Ein elektrischer Schwingkreis hat darüber hinaus den Vorteil, dass er auf eine Resonanzfrequenz abstimmbar ist, d.h. es können ohne Weiteres für verschiedene Zwecke mehrerer Schwingkreise verschiedenen Kommunikations- und/oder Sensorelementen zugeordnet werden und parallel nebeneinander betrieben werden.

In einer Weiterbildung dieser Ausführungsform ist die elektrische Eigenschaft des Schwingkreises durch das Kommunikationselement beeinflussbar. Dies ist insbesondere dann von Vorteil, wenn ein gemeinsamer Schwingkreis für ein Sensorelement und ein Kommunikationselement vorgesehen wird. So ist beispielsweise durch Einstrahlen der Resonanzfrequenz eine Ortserkennung eines zugehörigen Schwingkreises des Wechselelementes realisierbar, so dass hierdurch ein ortsauflösender Lagesensor in passiver Bauweise, d.h. ohne eigene Energieversorgung, vorliegt. Durch kodierte Beeinflussung der elektrischen Eigenschaft des Schwingkreises kann zusätzlich zu dieser Sensorfunktion eine Informationsübertragung stattfinden. So kann beispielsweise über den Chip eines Kommunikationselementes die Dämpfung des Schwingkreises in einer kodierten Sequenz beeinflusst und auf der Seite der Kontrolleinheit detektiert werden. Auf der Seite der Kontrolleinheit ist eine Sendeantenne zur Einstrahlung der Resonanzschwingung sowie eine Empfangsantenne zum Empfang der durch Induktion in dem Schwingkreis des Wechselelementes hervorgerufenen Strahlung vorzusehen. Mit Hilfe der empfangenen Antwort von dem Wechselelement kann die zu übertragende Information entschlüsselt werden.

Kommunikationselemente, die über eine kodierte Beeinflussung der elektrischen Eigenschaften eines Schwingkreises arbeiten sind beispielsweise als sogenannte RFID bekannt.

Mit Hilfe eines erfindungsgemäßen Kommunikationselementes kann eine Vielzahl von Vorteilen erzielt werden.

So kann zum einen der Verbrauch an Aufbereitungskapazität, die Wasserhärte oder die Laufzeit eines Wechselelementes überwacht werden. Hierdurch ergibt sich eine optimale Nutzung des Wechselelementes sowie ein Schutz des Verbrauchers und der Aufbereitungsvorrichtung vor fehlerhaftem Betrieb.

Eine Authentifizierung eines Wechselelementes ist möglich, sodass die Aufbereitungsvorrichtung vor Wechselelementen minderer Qualität geschützt werden kann.

Über eine entsprechende Kodierung können Wechselelemente spezifisch nach Herstellern von Aufbereitungsvorrichtungen gekennzeichnet werden. Weiterhin ist auch das Verbraucherverhalten mit Hilfe einer erfindungsgemäßen Technik erfassbar.

Eine bei der Transmission elektromagnetischer Wellen durch verschiedene Medien, z.B. durch Wasser eintretende Frequenzverschiebung kann sowohl bei der Sensortechnik als auch bei der Kommunikationstechnik durch gezielte Verstimmung der Resonanzfrequenzen kompensiert werden.

Eine erfindungsgemäße Vorrichtung ist wie im Ausführungsbeispiel als Einheit mit Anschlusskopf und Filterkerze ausgebildet. Eine Filterkerze zeichnet sich dadurch aus, dass sie als Wechselelement mit eigenem wasserdichten Gehäuse ausgebildet ist.

Erfindungsgemäß können jedoch auch selbstregenerierende Hausinstallationssysteme, insbesondere auch sogenannte Duplexsysteme mit wechselseitiger Regeneration, mit einer selbsttätigen Verschnitteinheit versehen werden. Auch die Anwendung in einer sogenannten Kerzenbatterie, bei der mehrere austauschbare Filterkerzen vorhanden sind und der Verschnitt zwischen Rohwasser und aufbereitetem Wasser nicht innerhalb der Kerze, sondern im Bereich des Gesamtsystems vorgenommen wird, kann durch eine erfindungsgemäße Verschnittverstellung die genannten Vorteile realisieren.

Ein Ausführungsbeispiel der Erfindung ist in der Zeichnung dargestellt und wird anhand der Figuren nachfolgend näher erläutert

Im Einzelnen zeigen
- Figur 1: eine schematische Ausschnittdarstellung einer erfindungsgemäßen Vorrichtung im Schnitt,
- Figur 2: eine perspektivische Darstellung eines Drosselventils zur Einstellung des Verschnittverhältnisses und
- Figuren 3a bis 3d: verschiedene Betriebsstellungen des Drosselelementes gemäß Figur 2.

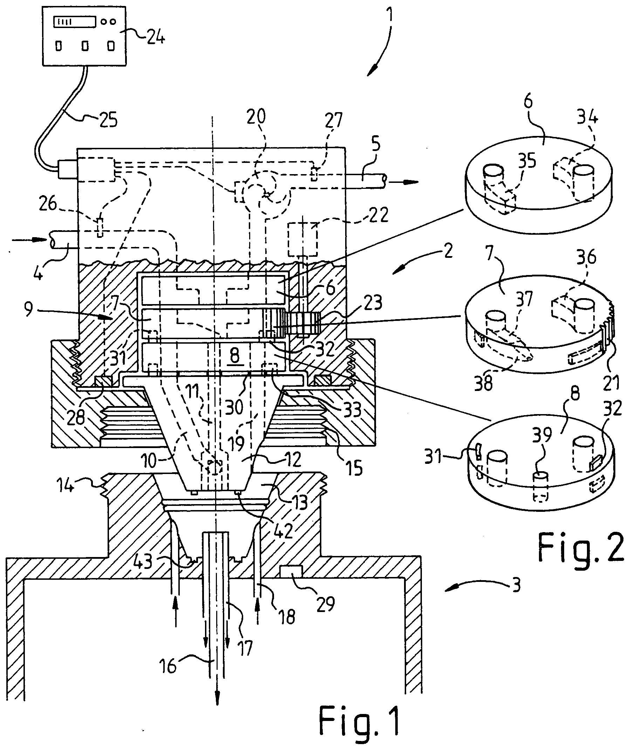

In der Wasseraufbereitungsvorrichtung 1 gemäß Figur 1 ist ein Anschlusskopf 2 als Anschlusselement sowie eine Filterkerze 3 als Wechselelement dargestellt.

Der Anschlusskopf 2 umfasst eine Eingangsleitung 4 sowie eine Ausgangsleitung 5. Der Anschlusskopf 2 wird über die Eingangsleitung 4 sowie die Ausgangsleitung 5 in ein nicht näher dargestelltes Wasserleitungssystem integriert.

Die Eingangsleitung 4 ist mit einer aus drei Lochscheiben 6, 7, 8 gebildeten Drosseleinheit 9 verbunden. In der Drosseleinheit 9 wird der Wasserpfad in zwei Strömungspfade 10, 11 aufgeteilt. Die Strömungspfade 10, 11 münden in einem Anschlusskegel 12 aus.

Die Filterkerze 3 weist eine zum Anschlusskegel 12 korrespondierende konische Hohlform 13 auf, die mit dem Anschlusskegel 12 beim Einschrauben der Filterkerze 3 in den Anschlusskopf 2 über die Gewinde 14, 15 formschlüssig verbunden wird. Dadurch wird der zentrale Strömungspfad 10 mit der zentralen Leitung 16 sowie der Strömungspfad 11 mit der Bypassleitung 17 verbunden. Die Bypassleitung 17 ist dabei koaxial um die zentrale Leitung 16 herum angeordnet.

Über eine nicht näher dargestellte Filterstrecke im inneren der Filterkerze 3 gelangt das aufbereitete Filtrat in den Bereich einer ringförmigen Auslassleitung 18, die im dargestellten oberen Bereich der Filterkerze 3 unmittelbar mit der Bypassleitung 17 in Verbindung steht. Somit gelangt das aufbereitete, über die Filterstrecke geleitete Wasser der zentralen Leitung 16 zusammen mit dem über die Bypassleitung 17 geleiteten Rohwasser gemeinsam in die Auslassleitung 18, so dass hier bereits verschnittenes Wasser im voreingestellten Verschnittverhältnis vorliegt. Die Auslassleitung 18 ist mit dem Kanal 19 im Anschlusskegel 12 bei eingesetzter Filterkerze 3 verbunden. Das verschnittene Wasser wird sodann über die Lochscheiben 6, 7, 8 der Drosseleinheit 9 sowie ein Flowmeter 20 zur Ausgangsleitung 5 geleitet.

Die mittlere Lochscheibe 7 ist in einem Teilbereich seines Umfangs mit einer Verzahnung 21 versehen, die mit einem über einen Stellmotor 22 getriebenes Zahnrad 23 kämmt. Über den Stellmotor 22 ist die Position der mittleren Lochscheibe 7 somit einstellbar.

Eine Kontrolleinheit 24 ist mit einer Leitung 25 am Anschlusskopf 2 angeschlossen. Sie steht mit zwei Leitwertsonden 26, 27 sowie dem Flowmeter 20 in Verbindung. Über eine nicht näher dargestellte Steuerleitung ist die Kontrolleinheit 24 darüber hinaus in der Lage, den Stellmotor 22 anzusteuern. Die Kontrolleinheit kann auch unmittelbar in dem Anschlusselement angeordnet sein und mit diesem eine Einheit bilden.

Weiterhin ist die Kontrolleinheit 24 mit einem in dem Anschlusskopf 2 angeordneten Kommunikationselement 28 verbunden, dass wiederum mit der Kontrolleinheit in Verbindung steht. In der Filterkerze 3 ist ein hierzu korrespondierendes Kommunikationselement 29 untergebracht. Zwischen dem Kommunikationselement 28, 29 ist ein drahtloser Kommunikationskanal vorgesehen. Insbesondere im Kommunikationselement 29 kann hierbei neben einer Sende- und/oder Empfangseinheit auch ein Speicherchip und/oder ein Prozessor integriert sein, so dass eine Datenübertragung und Speicherung wie vorgeschrieben möglich ist.

Die Lochscheiben 6, 7, 8 sind in der Realität dicht aneinander liegend angeordnet, so dass durch Formschluss eine dichte Leitungsführung erzeugt wird. Eine oder mehre dieser Scheiben 6, 7, 8 werden dabei bevorzugt als Keramikscheibe ausgeführt, so dass eine verschleißfreie dauerhafte Abdichtung gewährleistet ist. Der Einsatz von Keramik ist auch bei anderweitig geformten Ventileinheiten aufgrund der genannten Vorteile sinnvoll.

Am Anschlusskegel 12 können Dichtringe 30 für den dichten Abschluss der Strömungspfade 10, 11, 19 vorgesehen werden.

Mitnehmernocken 31 der Lochscheibe 8 greifen in entsprechende Nuten der Lochscheibe 7 ein, so dass bei entsprechender Winkelverdrehung der Lochscheibe 7 die Lochscheibe 8 mitgedreht wird. Entsprechende Mitnehmer 33 sind für den gleichzeitigen Antrieb des Anschlusskegels 12 vorgesehen.

Die Lochscheiben 6 und 7 weisen kreissegmentförmige Ausnehmungen 34, 35, 36, 37 auf, um die Wasserführung bei unterschiedlichen Winkelstellungen zu gewährleisten. Die Ausnehmung 37 der Lochsscheibe 7 ist dabei gegenüber Lochscheibe 8 mit Querschnittsverjüngungen versehen, um die zu dem Strömungspfad 11 zugeordnete Bohrung 39 mit einem positionsabhängigen, veränderbaren Leitungsquerschnitt anzuströmen.

Die Aufbereitungsvorrichtung 1 ist in der Lage, erfindungsgemäß selbsttätig das Verschnittverhältnis zwischen nicht aufbereitetem Rohwasser und aufbereitetem Wasser während des Betriebs nachzustellen, und so die eingangs erwähnten Vorteile zu bewirken.

Die Kontrolleinheit 24 ist in der Lage, über die Leitwertsonden 26, 27 sowohl die Rohwasserqualität als auch die Qualität des verschnittenen Wassers zu messen. Über das Flowmeter 20 erhält die Kontrolleinheit die Information über die insgesamt durchgeflossene Wassermenge. Hieraus ist die Kontrolleinheit in der Lage, den Erschöpfungsgrad des Aufbereitungsmediums zu bestimmen und daraus einen Sollwert für das Verschnittverhältnis zu ermitteln. Über den Stellmotor 22 stellt die Kontrolleinrichtung 24 das tatsächliche Verschnittverhältnis durch Positionsveränderung der Lochscheibe 7 auf den entsprechend gewünschten Wert ein.

In einer anderen Ausführungsform kann die Kontrolleinheit das Verschnittverhältnis auch unmittelbar auf einen gewünschten an der Leitwertsonde 27 messbaren Leitwert als Regelgröße regeln.

Durch die Kommunikationselemente 28, 29 sind darüber hinaus alle vorbeschriebenen Vorteile, beispielsweise Authentifizierung der Filterkerze 2, Speichern des Zustands der Filterkerze 2, Übermittlung von kerzenspezifischen Daten an die Kontrolleinheit, usw. möglich.

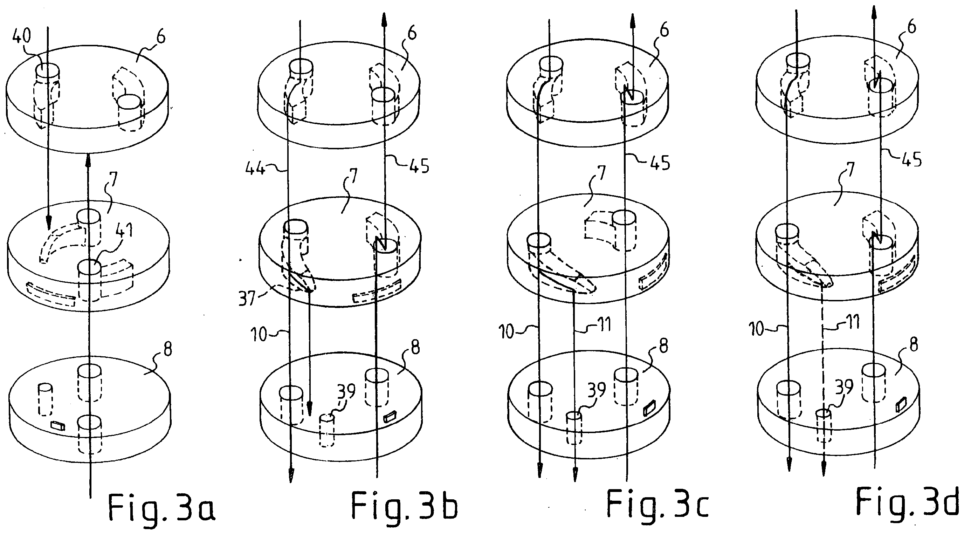

Die Figuren 3a bis 3d zeigen verschiedene Schaltstellungen der Lochscheiben 6, 7, 8 zueinander, woraus unterschiedliche Strömungszustände resultieren.

In Figur 3a ist der Sperrzustand eingestellt, d.h. die Bohrung 40, die mit der Eingangsleitung 4 verbunden ist, trifft auf die dichte Oberfläche der Lochscheibe 7, während die Bohrung 41 auf die dichte Unterseite der oberen Lochscheibe 6 trifft. In diesem Zustand bilden die Lochscheiben 6, 7, 8 ein Sperrventil, d.h. in diesem Zustand kann problemlos die Filterkerze 3 entnommen und ersetzt werden.

Beim Einsetzen einer Filterkerze werden über die Mitnehmer 42 des Anschlusskegels 12 sowie entsprechende Ausnehmungen 43 in der Stirnseite der Hohlform 13 der Anschlusskegel 12 durch das Einschrauben mitgedreht. Dabei werden über die Mitnehmer 31, 32, 33 die untere Lochscheibe 8 sowie die mittlere Lochscheibe 7 mitgeführt und ein offener Zustand gemäß den Figuren 3b, 3c und 3d erzielt. Hierbei ist erkennbar, dass über die Ausnehmung 37 der mittleren Lochscheibe 7 der eintreffende Wasserstrom 44 in zwei Strömungspfade 10, 11 aufgeteilt wird.

In der Stellung gemäß Figur 3b endet die Ausnehmung 37 auf der dichten Oberseite der unteren Lochscheibe 8 vor der Durchgangsbohrung 39, so dass in dieser Stellung der gesamte Wasserstrom über den Strömungspfad 10 verläuft. In der nächsten Schaltstellung gemäß Figur 3c überdeckt die Ausnehmung 37 mit großem Querschnitt die Durchgangsbohrung 39, so dass sich eine entsprechende Aufteilung des Volumenstroms auf die Strömungspfade 10 und 11 ergibt.

Die Winkelposition gemäß Figur 3d veranschaulicht, dass nur noch die Spitze der Ausnehmung 37 mit engerem Querschnitt in Kommunikation mit der Durchgangsbohrung 39 steht, so dass in dieser Ausführungsform nur eine reduzierte Wassermenge durch die Durchgangsbohrung 39 der Lochscheibe 8 gelangt. Zur Verdeutlichung dieses Sachverhaltes wurde der Strömungspfad 11 in dieser Darstellung gestrichelt gezeichnet. Hierdurch ergibt sich ein entsprechend verändertes Verschnittverhältnis zwischen den Wassermengen, die durch die Strömungspfade 10 und 11 strömen.

In allen drei Schaltstellungen gemäß den Figuren 3b, 3c und 3d ist die Öffnung des ausgehenden Wasserstroms 45 durch entsprechende Position und Formgebung der zugehörigen Durchgangsbohrungen oder Ausnehmungen in den Lochscheiben gewährleistet.

Das dargestellte Ausführungsbeispiel stellt nur eine Möglichkeit zur erfindungsgemäßen Nachstellung eines Verschnittverhältnisses dar. Anhand dieses Beispiels ist jedoch ohne weiteres nachvollziehbar, wie die erwähnten erfindungsgemäßen Vorteile erzielbar sind.

Die Bestimmung des einzustellenden Verschnittverhältnisses kann dabei, basierend auf Rechenalgorithmen oder auf andere Art, beispielsweise mittels einer Kennliniensteuerung mit Hilfe der erfassten Betriebsparameter, beispielsweise der Leitwerte und der Durchflussmenge, vorgenommen werden. Wie bereits erwähnt, kann eine Steuerung jedoch auch anderweitig, beispielsweise basierend auf Wassermenge und einer Zeitmessung vorgenommen werden, wobei ebenfalls die erfindungsgemäßen Vorteile zumindest teilweise realisierbar sind.

### Bezugszeichenliste:

- 1: Wasseraufbereitungsvorrichtung
- 2: Anschlusskopf
- 3: Filterkerze
- 4: Eingangsleitung
- 5: Ausgangsleitung
- 6: Lochscheibe
- 7: Lochscheibe
- 8: Lochscheibe
- 9: Drosseleinheit
- 10: Strömungspfad
- 11: Strömungspfad
- 12: Anschluss
- 13: Hohlform
- 14: Gewinde
- 15: Gewinde
- 16: Zentrale Leitung
- 17: Bypassleitung
- 18: Auslassleitung
- 19: Kanal
- 20: Flowmeter
- 21: Verzahnung
- 22: Stellmotor
- 23: Zahnrad
- 24: Kontrolleinheit
- 25: Leitung
- 26: Leitwertsensor
- 27: Leitwertsensor
- 28: Kommunikationselement
- 29: Kommunikationselement
- 30: Dichtring
- 31: Mitnehmernocke
- 32: Mitnehmernocke
- 33: Mitnehmer
- 34: Ausnehmung
- 35: Ausnehmung
- 36: Ausnehmung
- 37: Ausnehmung
- 38: Querschnittsverjüngung
- 39: Bohrung
- 40: Bohrung
- 41: Bohrung
- 42: Mitnehmer
- 43: Ausnehmung
- 44: Wasserstrom

## Patentansprüche

1. Vorrichtung zur Wasseraufbereitung (1) mit einem im Betrieb wasserdicht geschlossenen Gehäuse, einer mit einer externen Wasserleitung verbindbaren Wassereingangsleitung (4), einer mit einer externen Wasserleitung verbindbaren Wasserausgangsleitung (5), mit einem ein im Betrieb wasserdurchströmtes Aufbereitungsmedium beinhaltenden Aufbereitungsbereich, wobei das Aufbereitungsmedium im Betrieb in Kontakt mit durchströmendem Wasser steht, wobei die Vorrichtung eine Filterkerze (3) als austauschbares Wechselelement und ein während des Austausches des Wechselelementes (3) in der jeweiligen Wasserleitung angeschlossen verbleibendes Anschlusselement (2) aufweist, und mit einer Verschnittvorrichtung zum Verschneiden des aufbereiteten Wassers mit nicht oder auf andere Weise aufbereitetem Wasser in einem Verschnittverhältnis, das das Verhältnis der Menge aufbereiteten Wassers zur Menge nicht oder auf andere Weise aufbereiteten Wassers oder umgekehrt in dem verschnittenen Wasser darstellt und die Verschnittvorrichtung ein Stellelement (21, 22, 23) zur Verstellung des Verschnittverhältnisses aufweist, wobei das Stellelement (21, 22, 23) abhängig von wenigstens einem Betriebsparameter der Vorrichtung während des Betriebs durch die Vorrichtung selbsttätig betätigbar ist, wobei zur Einstellung des Verschnittverhältnisses eine Drosseleinheit (9) zur Veränderung des Volumenstroms durch wenigstens einen Strömungspfad des Wassers vorgesehen ist, wobei für das kontinuierliche Verschneiden von aufbereitetem Wasser mit Rohwasser ein erster Strömungspfad (10) mit einer Aufbereitungsstrecke und ein zweiter Strömungspfad (11) ohne bzw. mit anderer Aufbereitungsstrecke vorgesehen ist, wobei beide Strömungspfade gleichzeitig durchströmbar sind, **dadurch gekennzeichnet, dass** die Drosseleinheit (9) ein bewegliches Drosselelement (7) mit Durchlässen für wenigstens zwei Strömungspfade (10, 11) umfasst, mittels dem positionsabhängig der Querschnitt wenigstens eines Strömungspfades veränderbar ist, wobei das Drosselelement eine Drehscheibe (7) ist, die in axialer Richtung Durchlässe (36, 37) für die beiden Strömungspfade aufweist, so dass durch Drehung der Drehscheibe um ihre Achse damit Strömungspfade (10, 11) geöffnet oder geschlossen werden können.

2. Vorrichtung nach Anspruch 1 **dadurch gekennzeichnet, dass** eine selbsttätige Anpassung des Verschnittverhältnisses an den Wasserzustand und/oder den Zustand des Aufbereitungsmediums mittels des Stellelementes (7, 22, 23) vorgesehen ist.

3. Vorrichtung nach einem der vorgenannten Ansprüche **dadurch gekennzeichnet, dass** wenigstens ein Sensorelement (20, 26, 27) zur Erfassung des Wasserzustandes und/oder des Zustandes wenigstens eines Teils des Aufbereitungsmediums vorgesehen ist.

4. Vorrichtung nach einem der vorgenannten Ansprüche **dadurch gekennzeichnet, dass** eine Kontrolleinheit (24) zur Steuerung des Verschnittverhältnisses vorgesehen ist.

5. Vorrichtung nach einem der vorgenannten Ansprüche **dadurch gekennzeichnet, dass** der Aufbereitungsbereich ein Filtermaterial und/oder ein Ionentauschermaterial aufweist.

6. Vorrichtung nach einem der vorgenannten Ansprüche **dadurch gekennzeichnet, dass** ein Antrieb und/oder Energiespeicher für die Betätigung des Stellelementes vorgesehen ist.

7. Vorrichtung nach einem der vorgenannten Ansprüche **dadurch gekennzeichnet, dass** ein elektrischer und/oder mechanischer Energiespeicher für ein elektrisches und/oder mechanisches Betätigungselement vorgesehen ist.

8. Vorrichtung nach einem der vorgenannten Ansprüche **dadurch gekennzeichnet, dass** ein durch Wasserdruck aufschlagbarer Energiespeicher vorgesehen ist.

9. Vorrichtung nach einem der vorgenannten Ansprüche **dadurch gekennzeichnet, dass** das Stellelement wenigstens teilweise hydraulisch betätigbar ist.

10. Vorrichtung nach einem der vorgenannten Ansprüche **dadurch gekennzeichnet, dass** ein beim Wechsel des Wechselelementes (3) aufladbarer oder ersetzbarer Energiespeicher vorgesehen ist.

11. Vorrichtung nach einem der vorgenannten Ansprüche, **dadurch gekennzeichnet, dass** die Drosseleinheit (9) zur gemeinsamen Veränderung des Volumenstroms durch beide Strömungspfade (10, 11) vorgesehen ist.

12. Vorrichtung nach einem der vorgenannten Ansprüche **dadurch gekennzeichnet, dass** ein Sensorelement in der Form eines Flowmeters (20) und/oder wenigstens ein Leitwertsensor (26, 27) vorgesehen ist.

13. Vorrichtung nach einem der vorgenannten Ansprüche **dadurch gekennzeichnet, dass** ein Sensorelement (26, 27) zur Vermessung des Rohwassers und/oder des aufbereiteten Wassers vorgesehen ist.

14. Vorrichtung nach einem der vorgenannten Ansprüche **dadurch gekennzeichnet, dass** ein Kommunikationselement (28, 29) im Anschlusselement (2) und/oder im Wechselelement (3) vorgesehen ist.

15. Vorrichtung nach einem der Ansprüche 4 bis 14, **dadurch gekennzeichnet, dass** ein Kommunikationselement (28, 29) in der Kontrolleinheit (24) vorgesehen ist.

16. Vorrichtung nach Anspruch 14 oder 15, **dadurch gekennzeichnet, dass** ein drahtloser Kommunikationskanal zwischen einem Kommunikationselement (28) und einem Kommunikationselement (29) vorgesehen ist.

17. Vorrichtung nach Anspruch 15 oder 16 **dadurch gekennzeichnet, dass** eine drahtlose Energieübertragung zwischen wenigstens zwei Kommunikationselementen (28, 29) vorgesehen ist.

## Claims

1. An apparatus for water treatment (1) having a housing sealed in a water-tight manner during operation, a water inlet pipe (4) connectable to an external water pipe, a water outlet pipe (5) connectable to an external water pipe, having a treatment area containing a treatment medium, through which water flows during operation, wherein the treatment medium is in contact with through-flowing water during operation, wherein the apparatus has a filter candle (3) as a replaceable element and a connecting element (2) remaining connected to the respective water pipe during the replacement of the replaceable element (3), and having a blending device for blending the treated water with non-treated water or differently treated water in a blending ratio, which represents the ratio of the volume of treated water to the volume of non-treated or differently treated water or vice versa in the blended water, and the blending device has an adjusting element (21, 22, 23) for adjusting the blending ratio, wherein the adjusting element (21, 22, 23) is, depending on at least one operating parameter of the device, automatically actuated during operation by the device, wherein, to adjust the blending ratio, a throttle unit (9) is provided to change the volume flow through at least one flow path of the water, wherein, for the continual blending of treated water with untreated water, a first flow path (10) is provided with a treatment route and a second flow path (11) is provided without or with another treatment route, wherein both flow paths can be flowed through at the same time, **characterised in that** the throttle unit (9) comprises a moveable throttle element (7) with feed-throughs for at least two flow paths (10, 11), by means of which, in a position dependent manner, the cross section of at least one flow path is changeable, wherein the throttle element is a rotary disk (7) having feed-throughs (36, 37) for the two flow paths in the axial direction, such that by rotating the rotary disk about its axis flow paths (10, 11) can be thereby opened or closed.

2. The device according to claim 1, **characterised in that** a self-actuating adjustment of the blending ratio to the water condition and/or the state of the treatment medium is provided by means of the adjusting element (7, 22, 23).

3. The device according to one of the preceding claims, **characterised in that** at least one sensor element (20, 26, 27) is provided for detecting the water condition and/or the state of at least one part of the treatment medium.

4. The device according to one of the preceding claims, **characterised in that** a control unit (24) is provided for controlling the blending ratio.

5. The device according to one of the preceding claims, **characterised in that** the treatment area has a filter material and/or an ion exchanger material.

6. The device according to one of the preceding claims, **characterised in that** a drive mechanism and/or energy storage device is provided for actuating the adjusting element.

7. The device according to one of the preceding claims, **characterised in that** an electrical and/or mechanical energy storage device is provided for an electrical and/or mechanical actuating element.

8. The device according to one of the preceding claims, **characterised in that** an energy storage device that can be impinged by water pressure is provided.

9. The device according to one of the preceding claims, **characterised in that** the adjusting element can be at least partially hydraulically actuated.

10. The device according to one of the preceding claims, **characterised in that** an energy storage device that can be recharged or replaced during the replacement of the replaceable element (3) is provided.

11. The device according to one of the preceding claims, **characterised in that** the throttle unit (9) is provided for joint changing of the volume flow through both flow paths (10, 11).

12. The device according to one of the preceding claims, **characterised in that** a sensor element in the form of a flowmeter (20) and/or at least one conductance sensor (26, 27) is provided.

13. The device according to one of the preceding claims, **characterised in that** a sensor element (26, 27) is provided for measuring the untreated water and/or the treated water.

14. The device according to one of the preceding claims, **characterised in that** a communication element (28, 29) is provided in the connecting element (2) and/or in the replaceable element (3).

15. The device according to one of claims 4 to 14, **characterised in that** a communication element (28, 29) is provided in the control unit (24).

16. The device according to claim 14 or 15, **characterised in that** a wireless communication channel is provided between a communication element (28) and a communication element (29).

17. The device according to claim 15 or 16, **characterised in that** a wireless energy transfer is provided between at least two communication elements (28, 29).

## Revendications

1. Appareil de traitement de l'eau (1) comprenant un boîtier clos étanche à l'eau en fonctionnement, une conduite d'arrivée d'eau (4) pouvant être raccordée à une conduite d'eau extérieure, une conduite de sortie d'eau (5) pouvant être raccordée à une conduite d'eau extérieure, avec une zone de traitement contenant un fluide de traitement traversé par l'eau en fonctionnement, le fluide de traitement étant en contact, en fonctionnement, avec l'eau qui s'écoule, le dispositif comprenant une cartouche filtrante (3) servant d'élément de remplacement interchangeable et un élément de raccordement (2) restant raccordé dans la conduite d'eau respective pendant le changement d'élément de remplacement (3) et avec un dispositif de mélange pour mélanger l'eau traitée avec de l'eau non traitée ou traitée autrement selon un rapport de mélange représentant le rapport de la quantité d'eau traitée à la quantité d'eau non traitée ou traitée autrement ou inversement, dans l'eau mélangée et le dispositif de mélange comporte un élément de réglage (21, 22, 23) pour régler le rapport de mélange, l'élément de réglage (21, 22, 23) pouvant être actionné automatiquement par le dispositif pendant le fonctionnement, en fonction d'au moins un paramètre de fonctionnement du dispositif, dans lequel, pour régler le rapport de mélange, une unité d'étranglement (9) est prévue pour modifier le débit volumique dans au moins un trajet d'écoulement de l'eau, pour le mélange en continu de l'eau traitée avec de l'eau brute, un premier trajet d'écoulement (10) avec une voie de traitement et un second trajet d'écoulement (11) sans ou avec une autre voie de traitement étant prévus, les deux trajets d'écoulement étant traversés simultanément, **caractérisé en ce que** l'unité d'étranglement (9) comprend un élément d'étranglement mobile (7) avec des passages pour au moins deux trajets d'écoulement (10, 11), au moyen duquel la section transversale d'au moins un trajet d'écoulement est modifiable en fonction de la position, l'élément d'étranglement étant un disque rotatif (7) présentant des passages (36, 37) dans la direction axiale pour les deux trajets d'écoulement, de sorte que les trajets d'écoulement (10, 11) puissent être ouverts ou fermés lorsque le disque rotatif tourne autour de son axe.

2. Appareil selon la revendication 1, **caractérisé en ce qu'**il est prévu une adaptation automatique du rapport de mélange à l'état de l'eau et/ou à l'état du fluide de traitement au moyen de l'élément de réglage (7, 22, 23).

3. Appareil selon l'une des revendications précédentes, **caractérisé en ce qu'**au moins un élément capteur (20, 26, 27) est prévu pour détecter l'état de l'eau et/ou l'état d'au moins une partie du fluide de traitement.

4. Appareil selon l'une des revendications précédentes, **caractérisé en ce qu'**une unité de contrôle (24) est prévue pour contrôler le rapport de mélange.

5. Appareil selon l'une des revendications précédentes, **caractérisé en ce que** la zone de traitement comprend un matériau filtrant et/ou un matériau échangeur d'ions.

6. Appareil selon l'une des revendications précédentes, **caractérisé en ce qu'**un dispositif d'entraînement et/ou un accumulateur d'énergie est prévu pour actionner l'élément de réglage.

7. Appareil selon l'une des revendications précédentes, **caractérisé en ce qu'**il est prévu un accumulateur d'énergie électrique et/ou mécanique pour un élément d'actionnement électrique et/ou mécanique.

8. Appareil selon l'une des revendications précédentes, **caractérisé en ce qu'**il est prévu un accumulateur d'énergie soumis à la pression de l'eau.

9. Appareil selon l'une des revendications précédentes, **caractérisé en ce que** l'élément de réglage peut être au moins partiellement actionné hydrauliquement.

10. Appareil selon l'une des revendications précédentes, **caractérisé en ce qu'**un accumulateur d'énergie rechargeable ou remplaçable est prévu lors du changement de l'élément de remplacement (3).

11. Appareil selon l'une des revendications précédentes, **caractérisé en ce que** l'unité d'étranglement (9) est prévue pour la modification commune du débit volumique dans les deux trajets d'écoulement (10, 11).

12. Appareil selon l'une des revendications précédentes, **caractérisé en ce qu'**un élément capteur est prévu sous la forme d'un débitmètre (20) et/ou d'au moins un capteur de conductivité (26, 27).

13. Appareil selon l'une des revendications précédentes, **caractérisé en ce qu'**un élément capteur (26, 27) est prévu pour mesurer l'eau brute et/ou l'eau traitée.

14. Appareil selon l'une des revendications précédentes, **caractérisé en ce qu'**un élément de communication (28, 29) est prévu dans l'élément de raccordement (2) et/ou dans l'élément de remplacement (3).

15. Appareil selon l'une des revendications 4 à 14, **caractérisé en ce qu'**un élément de communication (28, 29) est prévu dans l'unité de contrôle (24).

16. Appareil selon la revendication 14 ou 15, **caractérisé en ce qu'**un canal de communication sans fil est prévu entre un élément de communication (28) et un élément de communication (29).

17. Appareil selon la revendication 15 ou 16, **caractérisé en ce qu'**une transmission d'énergie sans fil est prévue entre au moins deux éléments de communication (28, 29).
